# EUROPEAN PATENT APPLICATION

(11) **EP 2 445 097 A1**
(43) Date of publication of application: **25.04.2012**
(21) Application number: 10188469.0
(22) Date of filing: 22.10.2010
(51) Int. Cl.: H02M 3/335, H01F 27/28

(54) **A converter and an electronic equipment provided with such a converter**

(71) Applicant: SEPS Technologies AB, 851 70 Sundsvall (SE)
(72) Inventor: Bertilsson, Kent, SE-857 31 Sundsvall (SE)
(74) Representative: Olsson, Jan

(57) **Abstract**

A converter for converting AC to DC or DC to DC comprises a first transformer (10) having a secondary winding connected to a DC-load side of the converter, semiconductor switches connected to a primary winding of the transformer, a drive circuit configured to control the semiconductor switches to switch so as to deliver a voltage to the primary winding with a frequency exceeding 1 MHz and electronic components. The drive circuit comprises a second transformer (12) for voltage level shifting of said semiconductor switches with respect to a logic drive circuit unit of said drive circuit. The transformers are arranged inside or at the surface of a first printed circuit board (30), and the electronic components of the converter including said semiconductor switches are arranged inside or at the surface of a second printed circuit board (31). The two circuit boards are separated by a shielding ferrite layer (32) sandwiched therebetween.

## Description

### TECHNICAL FIELD OF THE INVENTION AND BACKGROUND ART

The present invention relates to a converter for converting AC to DC or DC to DC comprising
- a first transformer having a secondary winding connected to a DC-load side of the converter,
- semiconductor switches connected to a primary winding of said transformer,
- a drive circuit configured to control said semiconductor switches to switch so as to deliver a voltage to said primary winding with a frequency exceeding 1 MHz, and
- electronic components, such as diodes, resistors, capacitors and integrated circuits,
said drive circuit comprising a second transformer for voltage level shifting of said semiconductor switches with respect to a logic drive circuit unit of said drive circuit,
as well as an electronic equipment provided with such a converter.

Converters of this type are of particular interest in applications where the space available is restricted or it is important or at least favourable to have a low weight of such a converter. Typical such applications are for converting the network voltage of an electricity supply network to a voltage to be supplied to a said DC-load of any electronic equipment, especially portable such equipment, such as a laptop. However, the invention is not restricted to converters for such portable equipment, but such a converter is theoretically also a candidate for chargers of car batteries, DVD players and the like.

The reason for creating a voltage to said primary winding of said first transformer of the converter with a high frequency is that the higher such frequency the smaller transformer may be used for a given power level to be transferred to a DC-load connected to said DC-load side of the converter. However, increasing the frequency also results, when everything else is identical, in higher losses and by that a lower efficiency of said first transformer and by that of the converter.

This all together constitutes a challenge when trying to combine features of high transferable power, high efficiency and small size of a converter of the type described above.

Such a converter should besides that be able to operate at relatively high voltages on an input thereof, which may be made possible by the arrangement of said second transformer for voltage level shifting of the semiconductor switches with respect to a logic drive circuit unit of the drive circuit of the converter.

### SUMMARY OF THE INVENTION

The object of the present invention is to provide a converter of the type defined in the introduction with a favourable combination of said features of said challenge mentioned above, so that it may among other things be attractive to be used in electronic equipment operating at comparatively high powers and/or connected to comparatively high voltages.

This object is according to the invention obtained by providing such a converter with the following additional features:
the primary winding and the secondary winding of the first transformer are each in the form of at least one layer of turns inside or at the surface of a first printed circuit board, in which each of said at least two layers has at least one elongated winding element substantially following an elongated winding element of the other layer while being in an overlapping relationship therewith as seen perpendicularly to said printed circuit board over substantially the entire extension of said winding elements, also said second transformer is arranged inside or at the surface of said first printed circuit board, the converter also comprises a second printed circuit board and a ferrite layer sandwiched between and separating said second printed circuit board from said first printed circuit board, and the electronic components of the converter including said semiconductor switches are arranged inside or at the surface of said second printed circuit board.

By ensuring that said elongated winding elements, such as insulated copper wires, are in said overlapping relationship and these winding elements accordingly closely follow each other a good overlap of local magnetic fields of the primary winding with the secondary winding and by that a high coupling factor of the first transformer will be obtained, so that lower losses and by that a higher efficiency of the first transformer may be obtained for a certain said frequency. Furthermore, the arrangement of said first and second transformers and the inductance inside or at the surface of one printed circuit board with a ferrite layer sandwiched between this and a second printed circuit board provided with the electronic components of the converter including said semiconductor switches results in an efficient shielding of said transformers with respect to said electronic component and an increase of the inductance thereof so that an attractive size of the converter may be obtained also for higher said powers to be transferred. The arrangement of said two printed circuit boards and said ferrite layer in a stack also contributes to a remarkably reduced place demand of the converter with respect to known converters of this type having all components arranged on one single printed circuit board. According to an embodiment of the invention at least one of said layers of said transformer comprises a segment of a plurality of said elongated winding elements connected in parallel with each other and configured to extend so that each said elongated winding element is in said overlapping relationship with an elongated winding element in the other layer. This constitutes a very advantageous way of obtaining a said first transformer of the converter with a high coupling factor and high possible operation frequencies. Furthermore, to connect said winding elements in parallel in this way constitutes a very efficient way to reduce the series resistance of a transformer while increasing the total cross-section for the current flowing in each turn. Note that at high frequencies the penetration of an electrical signal flowing in an electrical conductor is limited to the near surface, the so-called Skin Effect, as a result a large surface area is important to achieve low series resistance rather than thickness of the metal layer as would be the case at low frequencies. Thus, the series resistance may be efficiently reduced by instead increasing the numbers of the elongated elements in each turn. However, the main purpose of this embodiment is to be able to achieve a high turn ratio required for a greater voltage transformation.

According to another embodiment of the invention said segment comprises two elongated winding elements connected in parallel and still substantially following an elongated winding element of the other layer. This is an advantageous way of obtaining the preferred properties of the embodiment discussed above.

According to another embodiment of the invention said second printed circuit board has said electronic components of the converter arranged on both large sides thereof, which results in a possibility to reduce the lateral extension of said converter and make it more compact.

According to another embodiment of the invention said first and second printed circuit boards has each a thickness of 0.3-3 mm or 1-2 mm. Such thin printed circuit boards will when arranged in a stack with a ferrite layer therebetween result in a total thickness of such a stack being in most contexts very low and is in another embodiment of the invention 10 mm, 3-8 mm or 3-5 mm.

According to another embodiment of the invention the cross-sectional area of a stack formed by said first and said second printed circuit board and said ferrite layer sandwiched therebetween is 5-40 mm², 5-30 mm² or 5-20 mm². A converter having such a small size, especially when also being as thin as mentioned above, will be easy to incorporate in most electronic equipments including portable such equipment.

According to another embodiment of the invention said drive circuit is configured to control said semiconductor switches to switch so as to deliver a voltage to said primary winding of said first transformer with a frequency ≥ 2 MHz or 2 MHz - 5 MHz. Such high frequencies are possible thanks to the obtained high coupling coefficient and low core-losses keeping the efficiency at an acceptable level, so that first transformer may with a given size transfer higher powers than should the frequency be lower.

According to another embodiment of the invention said first transformer is configured to transfer powers of 1 W - 100 W, > 50 W, > 100 W or 150 W - 3000 W. Even if said first transformer is configured to transfer powers being as high as 3000 W it may have an extremely low space demand while still being efficient.

According to another embodiment of the invention the converter is configured to receive a voltage on an input thereof exceeding 100 V or being 150 V - 400 V, so that the converter may be directly connected to for instance a domestic electricity supply network.

According to another embodiment of the invention said semiconductor switches connected to the primary winding of said transformer comprises a series connection of at least two semiconductor switches with a first end of said series connection connected to high voltage potential and the other, second end of the series connection connected to ground, and a so-called high side semiconductor switch at said first end is connected to said logic drive circuit unit through said second transformer. This constitutes a preferred way of controlling the so-called high side switch by obtaining suitable gate-to-source voltage thereof.

According to another embodiment of the invention the converter comprises an inductance connected to said DC-load side, and said inductance is arranged inside or at the surface of said first printed circuit board.

According to another embodiment of the invention said semiconductor switches are semiconductor devices of turn-off type, such as MOSFETs. Other semiconductor switches are of course also possible.

The invention also relates to an electronic equipment connectable to an electricity supply network and including a converter according to the present invention for converting the network voltage to a voltage to be supplied to a said DC-load of the electronic equipment. The advantages of such an electronic equipment including a converter according to the present invention appear clearly from the above discussion of such a converter and embodiments thereof.

According to an embodiment of the invention said electronic equipment is an equipment for displaying pictures, such as a video recorder or a DVD player, which are examples of electronic equipment in which it is possible to benefit from the preferred features of a converter according to the present invention, and portable equipment, such as a laptop, is another such example.

Further advantages as well as advantageous features of the invention will appear from the following description.

### BRIEF DESCRIPTION OF THE DRAWINGS

- Fig 1: is a very simplified circuit diagram of a converter according to a first embodiment of the invention,
- Figs 2 and 3: are very simplified views illustrating the physical appearance of a converter according to the present invention,
- Fig 4: is a very simplified view illustrating the windings of a first transformer of a converter according to an embodiment of the invention,
- Figs 5 and 6: are views corresponding to Fig 4 for other possible first transformers in a converter according to an embodiment of the invention, and
- Figs 7-9: are circuit diagrams corresponding to Fig 1 of three converters according to three further possible embodiments of the present invention.

### DETAILED DESCRIPTION OF EMBODIMENTS OF THE INVENTION

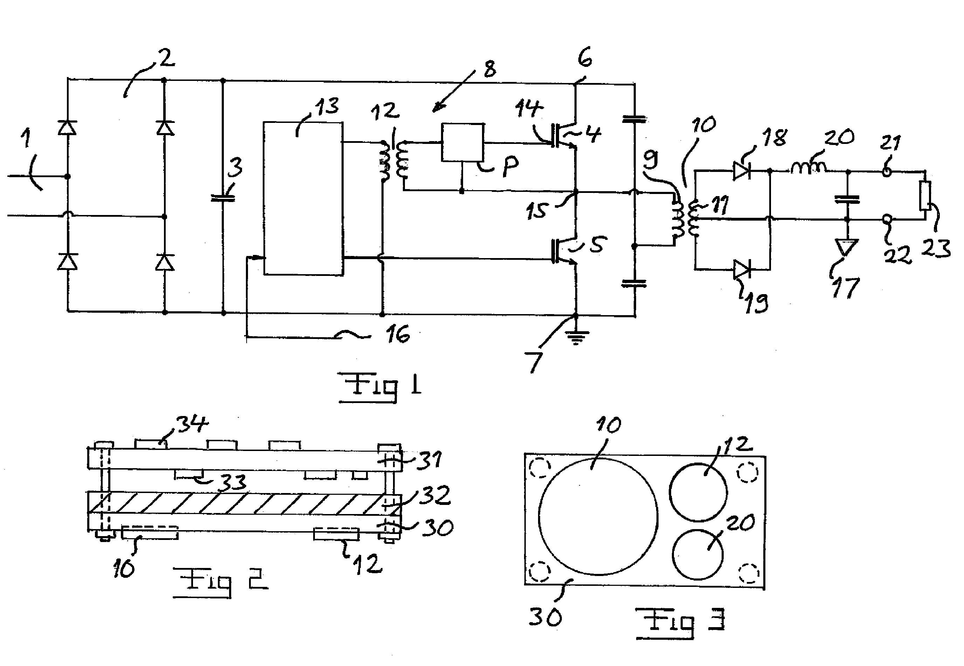

Fig 1 shows very schematically the major components of a converter according to a first embodiment of the invention being of the so-called half bridge type. The converter has in input 1 configured to receive an alternating voltage, which may for example arrive from an electricity supply network and has typically a voltage of 100 V - 350 V. This alternating voltage is rectified through a rectifier bridge 2 for providing a direct voltage across the terminals of a capacitor 3. A series connection of two semiconductor switches 4, 5 in the form of transistors has a first end connected to high voltage potential 6 and the other, second end connected to ground at 7.

A drive circuit 8 is configured to control the semiconductor switches 4, 5 to deliver a voltage to a primary winding 9 of a first transformer 10 having a secondary winding 11 connected to a DC-load side of the converter. Said drive circuit 8 comprises a second transformer 12 for voltage level shifting of the semiconductor switches with respect to a logic drive circuit unit 13 of the drive circuit 8. The secondary winding of the second transformer 12 is through components P, such as resistors, capacitors, diodes and integrated circuits, connected between a gate 14 and a source 15 of the so-called high side semiconductor switch 4 for obtaining a suitable gate-to-source voltage of that semiconductor switch for the control thereof.

The logic drive circuit unit 13 is configured to carry out the control of the semiconductor switches 4, 5 based on information received through a feedback loop 16 from a DC-side 17 of the converter. The drive circuit is configured to control the semiconductor switches to switch so as to deliver a voltage to the primary winding 9 of the first transformer with a frequency exceeding 1 MHz, and the voltage resulting in the secondary winding 11 of this transformer will be rectified by diodes 18, 19 and through an inductance 20 connected to one 21 of two poles 21, 22 forming a DC-load side of the converter. A load 23, which may for instance be a laptop into which the converter is incorporated, is schematically indicated.

Figs 2 and 3 show very schematically how the different components shown in Fig 1 may be arranged. The converter comprises a first printed circuit board 30 on which said first and second 12 transformers are arranged. Said inductance 20 is also arranged inside or at the surface of this first printed circuit board 30.

The converter also comprises a second printed circuit board 31 and a ferrite layer 32 sandwiched between and separating said second printed circuit board from said first printed circuit board. The electronic components of the converter including said semiconductor switches are arranged inside or at the surface of said second printed circuit board on both large sides thereof, and these components are indicated by 33, 34. The ferrite layer 32 will efficiently shield the electronic components of the second printed circuit board 31 from the two transformers and the inductance of the first printed circuit board, so that the efficiency of these transformers may be kept on a high level.

The thickness of each printed circuit board and of said ferrite layer may typically be in the order of 1.5 mm, so that the stack formed by these three members and additional electronic components may typically have a total thickness in the order of 8-10 mm. The full stack has typically a cross-section of 20-300 mm², and most typical in the order of 100 mm². Thus, this converter has a very low space demand.

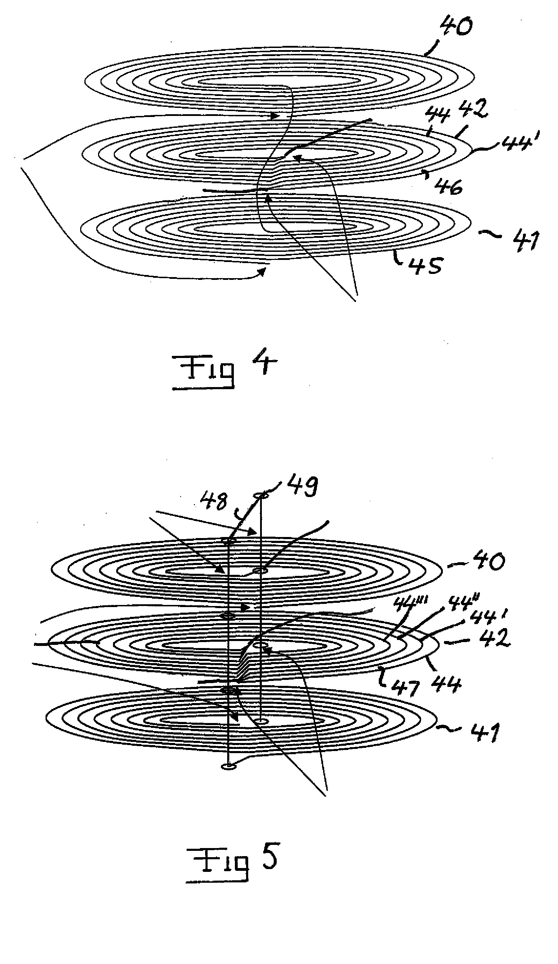

Fig 4 shows schematically the design of a said first transformer in a converter according to a preferred embodiment of the present invention having a primary winding in the form of two layers 40, 41 of turns inside or at the surface of said first printed circuit board and a secondary winding in the form of one layer 42 located inside or at the surface of said first printed circuit board between the layers 40 and 41. Each of said layers 40-42 has at least one elongated winding element 43-45 substantially following an elongated winding element of another adjacent layer while being in an overlapping relationship therewith as seen perpendicularly to said printed circuit board over substantially the entire extension of the winding elements. The winding elements of the layers 40, 41 of the primary winding are connected in series and have the same number of turns. The winding layer 42 of the secondary winding comprises a segment 46 of two elongated winding elements 44, 44' connected in parallel with each other and configured to extend so that each said elongated winding element is in said overlapping relationship with an elongated winding element in the layers 40 and 41. The elongated winding elements 44, 44' of the segment are connected to each other at the outer periphery of the segment and at the centre thereof, so that it is obtained that the elongated elements 44, 44' of the secondary winding layer extend closely along the elongated winding elements of the other two winding layers for obtaining a good overlap of local magnetic fields and by that a high coupling factor making it possible to operate the transformer for high frequencies with high efficiency.

Fig 5 illustrates another possible design of a said first transformer in a converter according to the present invention differing from the transformer shown in Fig 4 in two respects. The first one is that the second winding layer 42 has here a segment 47 of four elongated winding elements 44, 44', 44", 44"' connected in parallel with each other and configured to extend so that each said elongated winding element is in said overlapping relationship with an elongated winding element in the other two layers 40, 41. The other difference is that thanks to the connection of the two layers 40, 41 belonging to the primary winding by vias 48 running through holes 49 centrally and peripherally located in the printed circuit board these winding layers may be configured to have the same extension and also the same extension as the winding layer 42 as seen in the direction of the current to flow therein, i.e. all extending in said direction towards the centre of the winding layer or all away from the centre of the winding layer. This results in a very good match of the extension of the winding elements in the layers and a high magnetic coupling factor.

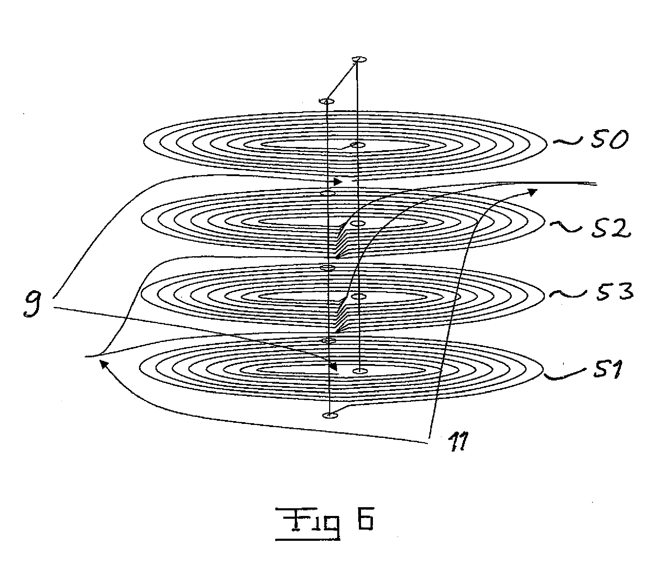

Fig 6 illustrates a further other possible design of a said first transformer in a converter according to the present invention having two outer primary winding layers 50, 51 connected in series and each arranged in an overlapping relationship with a secondary winding layer 52, 53 each, which has the same design as the secondary winding layer in the embodiment shown in

Fig 5. The two secondary winding layers 52, 53 are connected in parallel with each other. In each of the two layers 52, 53 4 windings are connected in parallel and configured to extend so that each said elongated winding element is in said overlapping relationship with an elongated winding element in the layers 50 and 51. The turn ratio of this transformer will be 1:16 and turnration of 1:4, 1:8 and 1:12 can be realized by changing the number of parallel windings in layers 52 and 53.

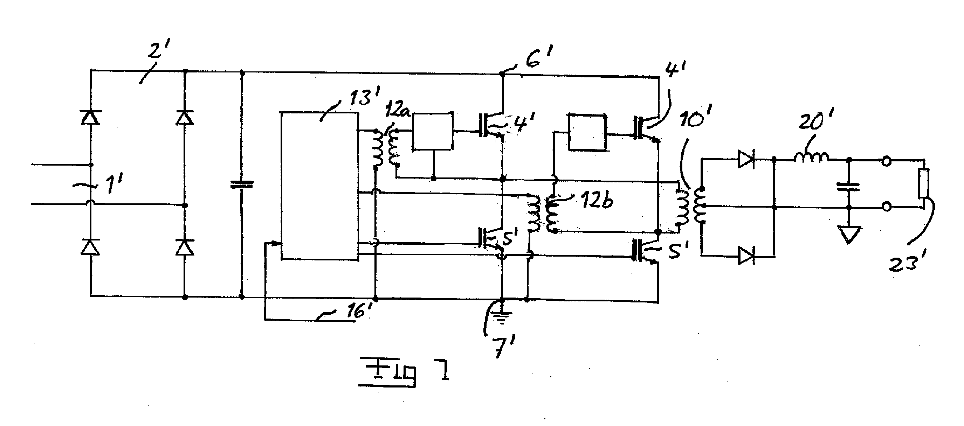

Fig 7 shows a circuit diagram corresponding to Fig 1 of a converter according to another embodiment of the invention and being of the so-called full-bridge type. This converter differs from the one illustrated in Fig 1 by having two series connections of semiconductor switches connected in parallel between ground 7' and high voltage potential 6' for forming a full-bridge controlled by a logic drive circuit unit 13' to deliver a voltage to the primary winding of a said first transformer 10' with a frequency exceeding 1 MHz. This also means that there are two said second transformers 12a, 12b for voltage level shifting of the semiconductor switches with respect to the logic drive circuit unit 13', one for the high side semiconductor switch of each said series connection. The components in common with the embodiment shown in Fig 1 are provided with the same reference numerals added by a '. The inductance 20' and the transformers 10' and 12a and 12b will in this embodiment be arranged inside or at the surface of a first printed circuit board, whereas the electronic components of the converter including the semiconductor switches will be arranged inside or at the surface of a said second printed circuit board, and the printed circuit boards will be separated by a shielding ferrite layer.

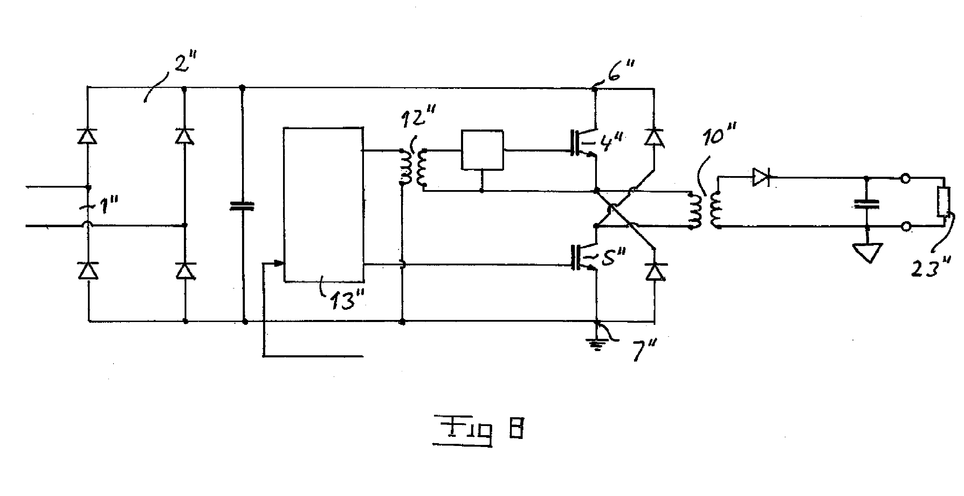

Fig 8 is a circuit diagram corresponding to Fig 1 of a converter according to another embodiment of the invention and being of the two-transistor-flyback-type. Components corresponding to components in the embodiments shown in Fig 1 and 7 have been provided with the same reference numerals added with a ". The arrangement of the transformers and the electronic components on two printed circuit boards separated by a ferrite layer will be the same for this embodiment as for the other embodiments.

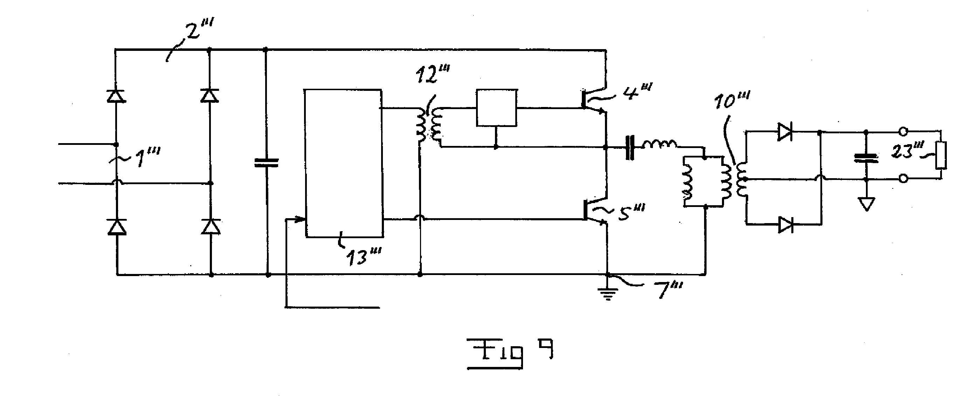

Fig 9 is a circuit diagram corresponding to Fig 1 of a converter according to another embodiment of the invention and being a LLC resonant converter with a half-bridge topology. This converter is provided with some further reactive components with respect to the converters according to the other embodiments for obtaining soft-switching properties thereof. Components corresponding to components in the embodiments shown in Fig 1, 7 and 8 have been provided with the same reference numerals added with a "'. Thus, resonant and quasi-resonant converters with the different topologies described above are within the scope of the present invention.

The invention is of course not in any way restricted to the embodiments described above, but many possibilities to modifications thereof will be apparent to a person with ordinary skill in the art without departing from the scope of the invention as defined in the appended claims.

The converter according to the invention may be configured to receive a direct voltage on the input thereof by being connected to a direct voltage source and then convert this direct voltage to a direct voltage suitable for feeding a load while transferring power through a said first transformer operating at a high frequency.

## Claims

1. A converter for converting AC to DC or DC to DC comprising
• a first transformer (10, 10', 10") having a secondary winding (11) connected to a DC-load side (17) of the converter,
• semiconductor switches (4, 5) connected to a primary winding (9) of said transformer,
• a drive circuit (8) configured to control said semiconductor switches to switch so as to deliver a voltage to said primary winding with a frequency exceeding 1 MHz, and
• electronic components (3, P), such as diodes, resistors, capacitors and integrated circuits,
said drive circuit comprising a second transformer (12, 12a, 12b) for voltage level shifting of said semiconductor switches with respect to a logic drive circuit unit (13, 13', 13") of said drive circuit,
**characterized in that** the primary winding (9) and the secondary winding (11) of the first transformer (10, 10', 10") are each in the form of at least one layer (40-42) of turns inside or at the surface of a first printed circuit board (30), in which each of said at least two layers has at least one elongated winding element substantially following an elongated winding element (43-45) of the other layer while being in an overlapping relationship therewith as seen perpendicularly to said printed circuit board over substantially the entire extension of said winding elements, that also said second transformer (12, 12a, 12b) is arranged inside or at the surface of said first printed circuit board, that the converter also comprises a second printed circuit board (31) and a ferrite (32) layer sandwiched between and separating said second printed circuit board from said first printed circuit board, and that the electronic components (3, P) of the converter including said semiconductor switches (4, 5) are arranged inside or at the surface of said second printed circuit board (31).

2. A converter according to claim 1, **characterized in that** at least one (42) of said layers of said first transformer (10, 10', 10") comprises a segment (46, 47) of a plurality of said elongated winding elements (44, 44', 44", 44"')connected in parallel with each other and configured to extend so that each said elongated winding element is in said overlapping relationship with an elongated winding element (43, 45) in the other layer (40, 41).

3. A converter according to claim 2, **characterized in that** said segment (46) comprises two said elongated winding elements (44, 44') connected in parallel and still substantially following an elongated winding element (43, 45) of the other layer (40, 41).

4. A converter according to any of the preceding claims, **characterized in that** said second printed circuit board (31) has said electronic components (33, 34) of the converter arranged on both large sides thereof.

5. A converter according to any of the preceding claims, **characterized in that** said first (30) and second (31) printed circuit board has each a thickness of 0.3-3 mm or 1-2 mm.

6. A converter according to any of the preceding claims, **characterized in that** the total thickness of a stack formed by said first (30) and second (31) printed circuit board and the ferrite layer (32) sandwiched therebetween is less than 10 mm, 3-8 mm or 3-5 mm.

7. A converter according to any of the preceding claims, **characterized in that** the cross-sectional area of a stack formed by said first (30) and said second (31) printed circuit board and said ferrite layer (32) sandwiched therebetween is 5-40 mm², 5-30 mm² or 5-20 mm².

8. A converter according to any of the preceding claims, **characterized in that** said drive circuit (8) is configured to control said semiconductor switches (4, 5) to switch so as to deliver a voltage to said primary winding (9) of said first transformer (10, 10', 10") with a frequency ≥ 2 MHz or 2 MHz - 5 MHz.

9. A converter according to any of the preceding claims, **characterized in that** said first transformer (10, 10', 10") is configured to transfer powers of 1 W - 100 W, > 50 W, > 100 W or 150 W - 3000 W.

10. A converter according to any of the preceding claims, **characterized in that** it is configured to receive a voltage on an input thereof exceeding 100 V or being 150 V - 400 V.

11. A converter according to any of the preceding claims, **characterized in that** said semiconductor switches (4, 5) connected to the primary winding (9) of said first transformer (10) comprises a series connection of at least two semiconductor switches with a first end of said series connection connected to high voltage potential (6) and the other, second end of the series connection connected to ground (7), and that a so-called high side semiconductor switch (4) at said first end is connected to said logic drive circuit unit (13) through said second transformer (12).

12. A converter according to any of claims 1-11, **characterized in that** it comprises an inductance (20) connected to said DC-load side, and that said inductance is arranged inside or at the surface of said first printed circuit board (30).

13. A converter according to any of the preceding claims, **characterized in that** said semiconductor switches (4, 5) are semiconductor devices of turn-off type, such as MOSFETs.

14. An electronic equipment connectable to an electricity supply network and including a converter according to any of claims 1-13 for converting the network voltage to a voltage to be supplied to a said DC-load of the electronic equipment.

15. An electronic equipment according to claim 14, **characterized in that** it is an equipment for displaying pictures, such as a video recorder or a DVD player.

16. An equipment according to claim 14, **characterized in that** it is a portable equipment, such as a laptop.
